# EUROPÄISCHE PATENTSCHRIFT

(11) **EP 0 947 689 B1**
(45) Veröffentlichungstag und Bekanntmachung des Hinweises auf die Patenterteilung: **14.04.2004**
(21) Anmeldenummer: 99104987.5
(22) Anmeldetag: 12.03.1999
(51) Int. Cl.: F02M 31/18

(54) **Verfahren zur Erzeugung eines Flüssigbrennstoff-/Luftgemischs zum Betrieb einer Wärmekraftmaschine**
Method of forming a liquid fuel-air mixture for operating a heat engine
Procédé pour former un mélange carburant liquide-air pour faire fonctionner un moteur thermique

(30) Priorität: 28.03.1998 DE 19813891
(43) Veröffentlichungstag der Anmeldung: 06.10.1999
(73) Patentinhaber: GVP Gesellschaft zur Vermarktung der Porenbrennertechnik mbH, 91058 Erlangen (DE)
(72) Erfinder: Weclas, Miroslav, 91094 Langensendelbach (DE)
(74) Vertreter: Gassner, Wolfgang, Dr.

(56) Entgegenhaltungen:
- GB-A- 2 313 623
- US-A- 3 667 436
- US-A- 4 103 658
- US-A- 5 207 734

## Beschreibung

Die Erfindung betrifft ein Verfahren nach dem Oberbegriff des Anspruchs 1. Sie betrifft ferner eine Wärmekraftmaschine nach dem Oberbegriff des Anspruchs 15.

Nach dem Stand der Technik sind bei benzinbetriebenen Wärmekraftmaschinen, insbesondere bei Otto-Motoren, die folgenden Verfahren zur Erzeugung des Flüssigbrennstoff-/Luftgemischs bekannt:
a) Der Flüssigbrennstoff wird in einem Vergaser zerstäubt und mit Luft gemischt.
b) Der Flüssigbrennstoff wird in den Einlaßkanal in der Nähe des Einlaßventils eingespritzt.
c) Der Flüssigbrennstoff wird direkt in den Brennraum eingespritzt und dort mit durch den Einlaßkanal zugeführter Luft gemischt.

Das Verfahren lit. a ist nachteilig, weil damit die zum ordnungsgemäßen Betrieb eines Abgaskatalysators erforderliche präzise Gemischregulierung nicht durchführbar ist. Mit dem Verfahren lit. b wird dieser Nachteil behoben. Das Gemisch weist hier allerdings nicht die für eine weitgehend schadstoffarme Verbrennung erforderliche optimale Homogenität auf. Dieser Nachteil wird mit dem Verfahren lit. c teilweise behoben. Insbesondere im Teil- und Vollastbereich steht nur eine kurze Zeit für das Einspritzen des Flüssigbrennstoffs zur Verfügung. Eine vollständige Verdampfung findet hier nicht statt. Eine Schichtung des Gemischs ist nicht möglich. Die Homogenität des Gemischs ist nicht optimal. Die Verbrennung kann in den vorgenannten Lastbereichen nicht als schadstoffarm bezeichnet werden.

Aus der DE-OS 2 3 06 362 ist ferner ein Verfahren zur Erzeugung eines Flüssigbrennstoff-/Luft-Gemischs zum Betrieb einer Wärmekraftmaschine bekannt, wobei der Flüssigbrennstoff in einem mit dem Brennraum verbindbaren ersten Kanal eingespritzt und durch ein im ersten Kanal aufgenommenes poröses Mittel geführt und verdampft wird.

Die DE-OS 23 43 185 beschreibt ein Verfahren zum Verdampfen von flüssigen Brennstoffen. Der flüssige Brennstoff wird dabei durch einen porösen Körper geleitet, der als Wärmetauscher ausgebildet und mittels Abgasen beheizbar ist.

Die DE 36 24 977 A1 betrifft ein Gemischaufbereitungs- und Zuteilungsverfahren, bei dem zugeführter Kraftstoff ebenfalls mittels eines durch Abgase beheizbaren Wärmetauschers verdampt wird. Der verdampfte Kraftstoff wird sodann im Schichtladeverfahren zusammen mit Frischluft im Brennraum gemischt.

Mit dem vorgenannten Verfahren wird zwar eine schadstoffreduzierte Verbrennung erreicht. Gleichwohl kann die Verbrennung nicht als schadstoffarm bezeichnet werden.

Aufgabe der vorliegenden Erfindung ist es, die Nachteile nach dem Stand der Technik zu beseitigen. Es sollen insbesondere ein Verfahren und eine Wärmekraftmaschine angegeben werden, mit denen in allen Lastbereichen eine möglichst effiziente und schadstoffarme Verbrennung möglich ist.

Diese Aufgabe wird durch die kennzeichnenden Merkmale der Ansprüche 1 und 15 gelöst. Zweckmäßige Weiterbildungen ergeben sich aus den Merkmalen der Ansprüche 2 bis 14 und 16 bis 28.

Verfahrensseitig wird die Aufgabe dadurch gelöst, daß im porösen Mittel ein aus Abgasen und verdampftem Flüssigbrennstoff bestehendes nicht zündfähiges Vorgemisch hergestellt und anschließend das Vorgemisch im Brennraum mit sauerstoffhaltigem Gas gemischt wird. Dadurch wird lastunabhängig die Homogenität des Gemischs verbessert. Es ist gewährleistet, daß der Flüssigkraftstoff immer vollständig verdampft ist. Eine Schichtung des Gemischs im Zylinder ist möglich. Es wird eine besonders schadstoffarme Verbrennung erzielt. Durch die Herstellung des Vorgemischs wird eine Selbstentzündung des im porösen Mittel aufgenommenen Flüssigbrennstoffs vermieden.

Nach einer Ausgestaltung ist der Raum ein erster Kanal, durch den die bei der Verbrennung gebildeten Abgase abgeführt werden können, wobei die Wärme der Abgase vorteilhafterweise zumindest teilweise auf das poröse Mittel übertragen wird. Zumindest ein Teil der Abgase kann im porösen Mittel verdichtet werden. So kann auf einfache und wirtschaftliche Weise das poröse Mittel weiter aufgeheizt werden.

Zweckmäßigerweise ist der Brennraum mit einem zweiten Kanal verbindbar, durch den weiteres sauerstoffhaltiges Gas dem Brennraum zugeführt werden kann. Dadurch kann das Gemisch besonders einfach eingestellt und geschichtet werden.

Das aus dem Vorgemisch mit dem sauerstoffhaltigen Gas gebildete Gemisch kann im Brennraum gemischt, verdichtet und anschließend verbrannt werden. Während eines Ansaug-Takts können zweckmäßigerweise ein erstes Ventil zum Verschließen des ersten Kanals und ein zweites Ventil zum Verschließen des zweiten Kanals geöffnet werden. Beim Ausstoßen der Abgase kann der erste Kanal bei geöffnetem ersten Ventil mit einem dritten abgasstromabwärts des porösen Mittels nachgeschalteten Ventil zumindest zeitweise geschlossen sein. Statt des dritten Ventils kann auch eine Drosselklappe oder dgl. vorgesehen sein. In diesem Fall kann der erste Kanal beim Ausstoßen der Abgase auch nur teilweise geschlossen sein. Die vorgenannten Maßnahmen bewirken eine besonders schadstoffarme Verbrennung, weil hier die Abgase des vorhergehenden Verbrennungszyklusses zumindest zum Teil zurückgeführt und einer nochmaligen Verbrennung unterzogen werden.

Nach einer weiteren Ausgestaltung kann der Raum eine mit einem vierten Ventil verschließbare Kammer sein. Die Kammer weist zweckmäßigerweise eine zentrale zum Brennraum hin gerichtete Öffnung auf. Dabei handelt es sich um eine besonders einfach und kostengünstig herstellbare Variante.

Das vierte Ventil kann während des Expansions- und/oder Verdichtungs-Takts für eine vorgegebene Zeit geöffnet werden. So ist ein einfaches Beladen der Kammer mit Abgasen bzw. ein Entladen des Vorgemischs in den Brennraum möglich.

Es ist ferner eine Wärmekraftmaschine vorgesehen, bei der erfindungsgemäß das Absperrmittel so steuerbar ist, daß im porösen Mittel ein aus Abgasen und verdampftem Flüssigbrennstoff bestehendes nicht zündfähiges Vorgemisch herstell- und anschließend das Vorgemisch im Brennraum mit sauerstoffhaltigem Gas mischbar ist. Dadurch wird lastunabhängig ein homogenes Gemisch hergestellt. Eine solche Wärmekraftmaschine zeichnet sich durch eine besonders schadstoffarme Verbrennung aus.

Weitere Vorteile der Erfindung werden anhand der in der Zeichnung dargestellten Ausführungsbeispiele erläutert. Hierin zeigen:
- Fig. 1: eine erste Wärmekraftmaschine am Ende des Arbeits-Takts,
- Fig. 2: die Wärmekraftmaschine nach Fig. 1 während einer ersten Phase des Ausstoß-Takts,
- Fig. 3: die Wärmekraftmaschine nach Fig. 1 während einer zweiten Phase des Ausstoß-Takts,
- Fig. 4: die Wärmekraftmaschine nach Fig. 1 am Ende des Ausstoß-Takts,
- Fig. 5: die Wärmekraftmaschine nach Fig. 1 am Beginn des Ansaug-Takts,
- Fig. 6: die Wärmekraftmaschine nach Fig. 1 am Ende des Ansaug-Takts,
- Fig. 7: die Wärmekraftmaschine nach Fig. 1 während des Verdichtungs-Takts,
- Fig. 8: eine zweite Wärmekraftmaschine während einer ersten Phase des Arbeits-Takts,
- Fig. 9: die Wärmekraftmaschine nach Fig. 8 während einer ersten Phase des Ausstoß-Takts,
- Fig. 10: die Wärmekraftmaschine nach Fig. 8 während einer zweiten Phase des Ausstoß-Takts,
- Fig. 11: die Wärmekraftmaschine nach Fig. 8 während des Ansaug-Takts,
- Fig. 12: die Wärmekraftmaschine nach Fig. 8 während einer ersten Phase des Verdichtungs-Takts,
- Fig. 13: die Wärmekraftmaschine nach Fig. 8 während einer zweiten Phase des Verdichtungs-Takts,
- Fig. 14: die Wärmekraftmaschine nach Fig. 8 während einer dritten Phase des Verdichtungs-Takts und
- Fig. 15: die Wärmekraftmaschine nach Fig. 8 während einer zweiten Phase des Arbeits-Takts.

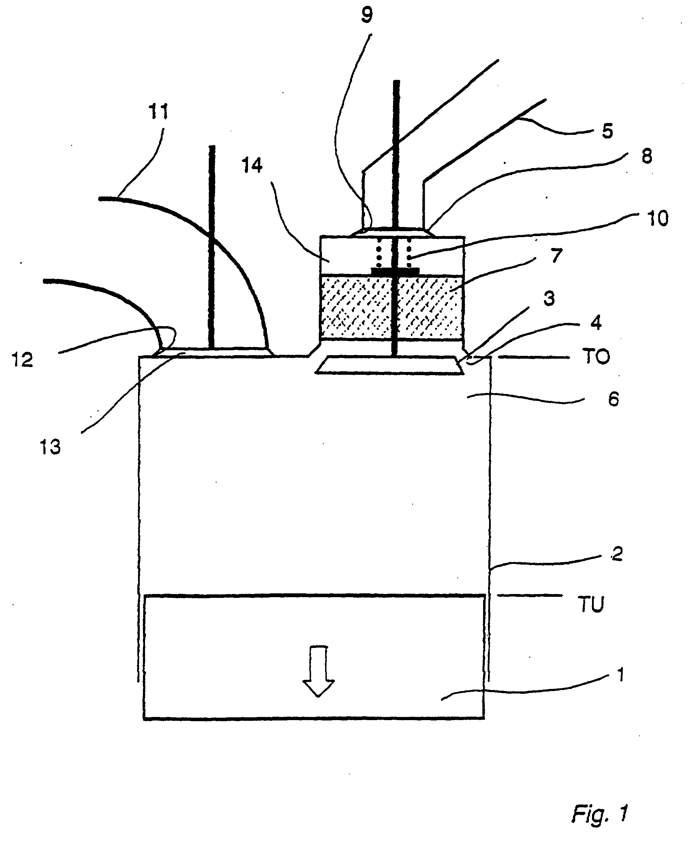

Bei der in den Fig. 1 bis 7 gezeigten Wärmekraftmaschine handelt es sich um einen Otto-Motor, bei dem ein Kolben 1 hinund herbewegbar in einem Zylinder 2 geführt ist. Mittels eines ersten Ventils 3 ist eine erste Öffnung 4 eines ersten Kanals 5 gegenüber einem Brennraum 6 verschließbar. In der Nähe des ersten Ventils 3 ist im ersten Kanal 5 ein poröses Mittel 7 vorgesehen. Dabei handelt es sich vorzugsweise um eine poröse Keramik mit einer hohen Wärmekapazität. Sie kann beispielsweise aus Aluminiumoxid, Magnesiumoxid, Zirkonoxid, Siliciumcarbid oder dgl. hergestellt sein. Der Bereich des ersten Kanals 5, in dem das poröse Mittel 7 aufgenommen ist, weist vorzugsweise einen erweiterten Durchmesser auf. Abgasstromabwärts des porösen Mittels 7 ist ein drittes Ventil 8 vorgesehen, mit dem eine dritte durch eine Verkleinerung des Durchmessers gebildete Öffnung 9 verschließbar ist. Das dritte Ventil 8 wird durch eine Feder 10 in die geschlossene Stellung gezwungen.

Ein zweiter Kanal 11 mündet mit einer zweiten Öffnung 12 in den Brennraum 6. Die zweite Öffnung 12 ist mittels eines zweiten Ventils 13 verschließbar.

Zwischen dem ersten 3 und dem dritten Ventil 8 ist eine Kammer 14 gebildet, in der das poröse Mittel 7 aufgenommen ist.

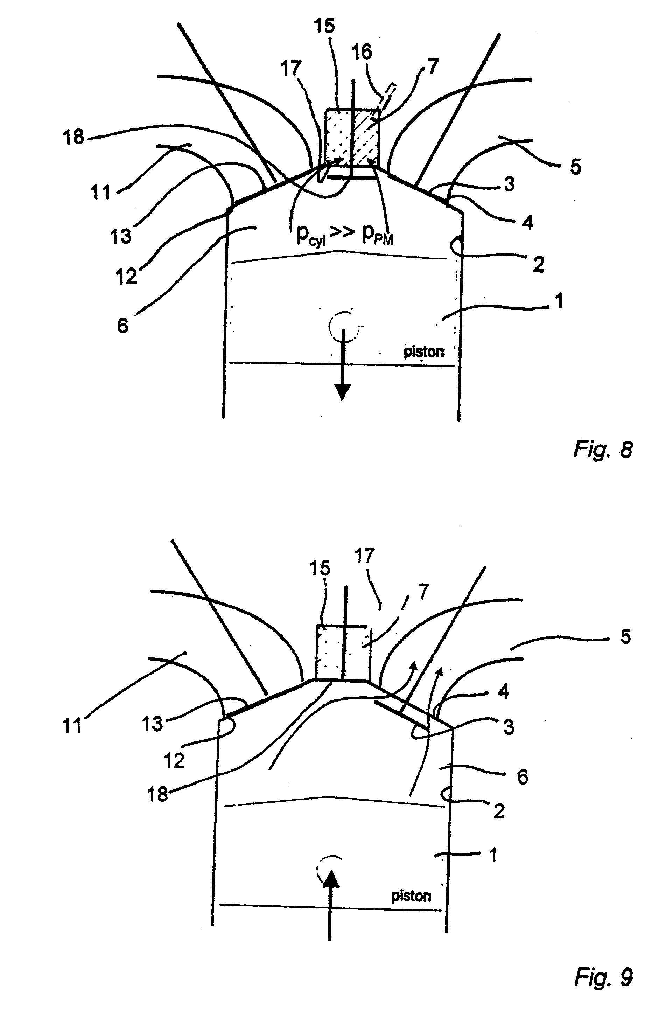

In den Fig. 8 bis 15 ist eine zweite Wärmekraftmaschine gezeigt. Dabei handelt es sich wiederum um einen Otto-Motor, der als Selbstzünder nach dem Diesel-Prinzip oder als Fremdzünder ausgebildet sein kann. Das poröse Mittel 7 ist hier in einer weiteren Kammer 15 aufgenommen. In die weitere Kammer 15 mündet eine Einspritzdüse 16. Eine vierte Öffnung 17 verbindet die weitere Kammer 15 mit dem Brennraum 6. Die vierte Öffnung 17 ist mittels eines vierten Ventils 18 verschließbar.

Die Funktion der ersten Wärmekraftmaschine ist die folgende:

In Fig. 1 ist die Wärmekraftmaschine am Ende des Arbeits- bzw. Expansions-Takts gezeigt. Der Kolben 1 befindet sich am unteren Totpunkt TU. Das erste Ventil 3 ist geöffnet; das zweite 13 und dritte Ventil 8 sind geschlossen. Heiße Verbrennungsgase gelangen durch die erste Öffnung 4 in das poröse Mittel 7.

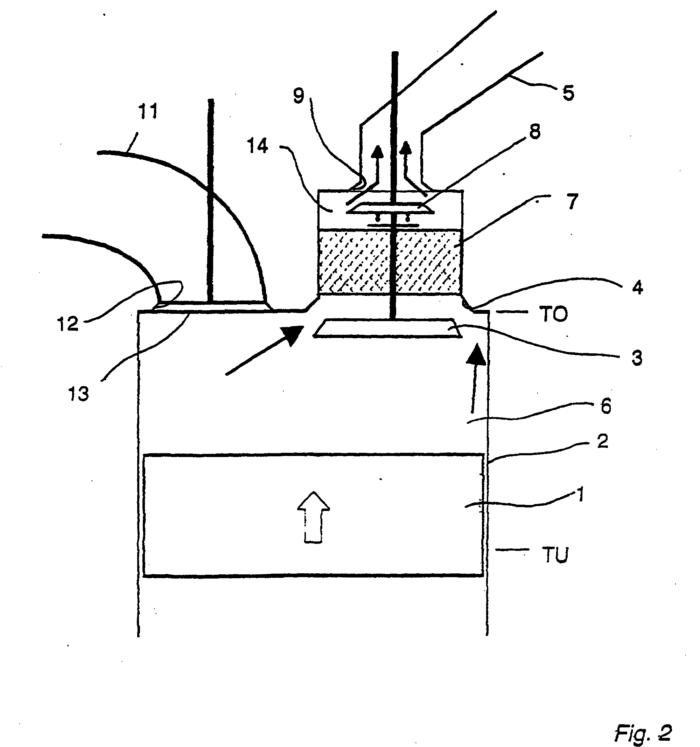

Fig. 2 zeigt die Wärmekraftmaschine nach Fig. 1 während einer ersten Phase des Ausstoß-Takts. Das erste 3 und das dritte Ventil 8 sind geöffnet; das zweite Ventil 13 ist geschlossen. Die heißen Abgase werden durch die Bewegung des Kolbens 1 in Richtung der Ventile 3, 13 durch das poröse Mittel 7 gedrückt und passieren abgasstromabwärts des porösen Mittels 7 die dritte Öffnung 9. Sie werden von da via des ersten Kanals 5 einer (hier nicht dargestellten) Auspuffanlage zugeführt. Beim Durchleiten der heißen Abgase durch das poröse Mittel 7 geben diese einen Teil ihrer Wärme ab. Das poröse Mittel 7 wird erhitzt.

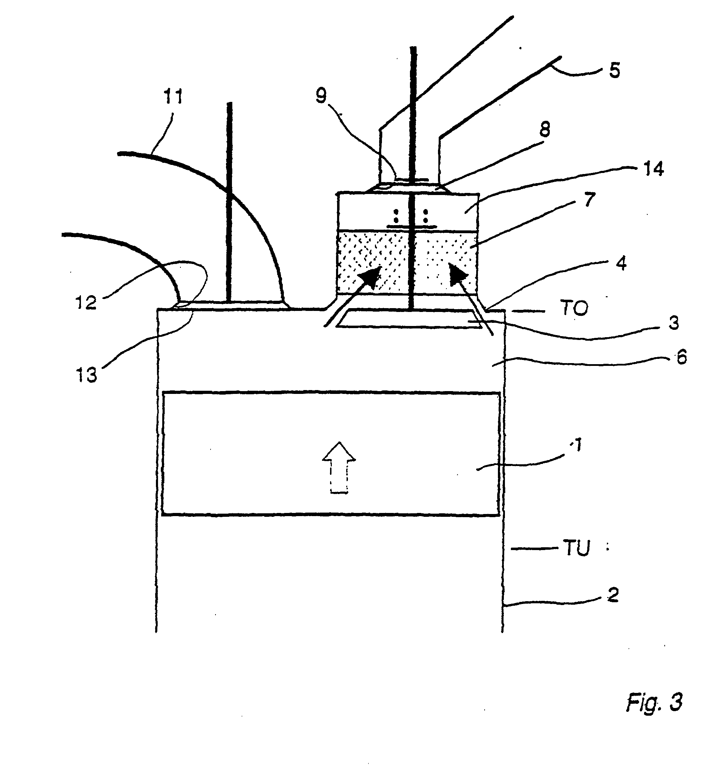

Fig. 3 zeigt die Wärmekraftmaschine nach Fig. 1 während einer zweiten Phase des Ausstoß-Takts. Dabei sind das zweite 13 und das dritte Ventil 8 geschlossen; das erste Ventil 3 ist geöffnet. Die im Brennraum 6 verbliebenen hießen Abgase werden während dieser Phase in der Kammer 14 bzw. im porösen Mittel 7 verdichtet. Dadurch steigt die Temperatur des porösen Mittels 7 weiter an.

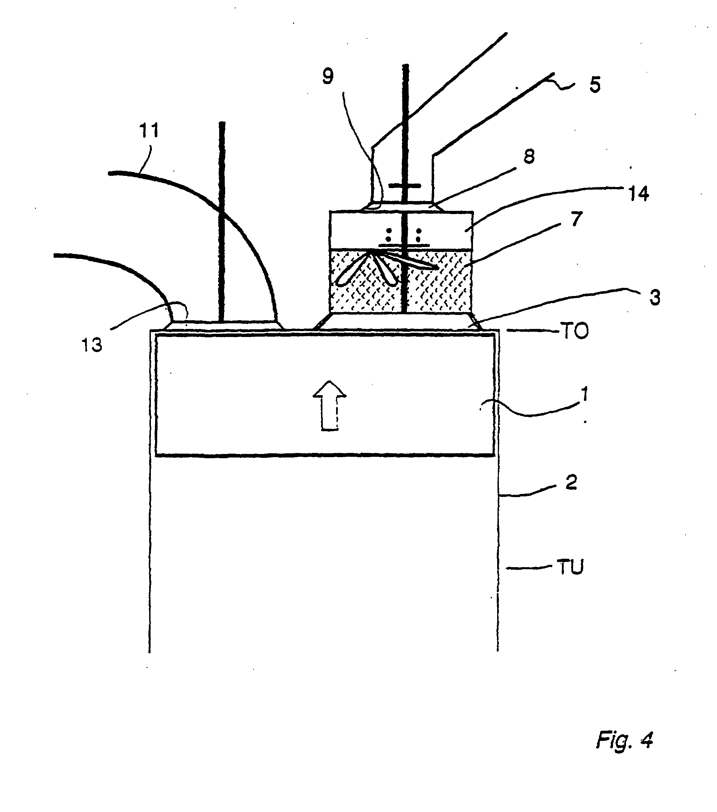

Fig. 4 zeigt die Wärmekraftmaschine nach Fig. 1 am Ende des Ausstoß-Takts. Das erste 3, zweite 13 und dritte Ventil 8 sind geschlossen. In der Kammer 14 sind heiße verdichtete Abgase eingeschlossen. Sie befinden sich im wesentlichen innerhalb des porösen Mittels 7. Der Kolben 1 befindet sich am oberen Totpunkt TO. Zu diesem Zeitpunkt wird mittels einer (hier nicht dargestellten) Flüssigbrennstoff-Einspritzeinrichtung Flüssigbrennstoff, wie Benzin, in das poröse Mittel 7 oder in die Kammer 14 eingespritzt. Das poröse Mittel 7 weist eine Temperatur im Bereich von etwa 600 bis 1200°C auf. Der eingespritzte Flüssigbrennstoff verdampft schlagartig. Er bildet zusammen mit den in der Kammer 14 befindlichen verdichteten Abgasen ein vollständig homogenes Gasgemisch. Die Homogenität dieses Gasgemischs ist auch bei kurzen Schließzeiten, wie sie im Vollastbereich von Wärmekraftmaschinen auftreten, gewährleistet. Das aus Flüssigbrennstoff und Abgasen bestehende Vorgemisch ist infolge Sauerstoffmangels nicht brennbar.

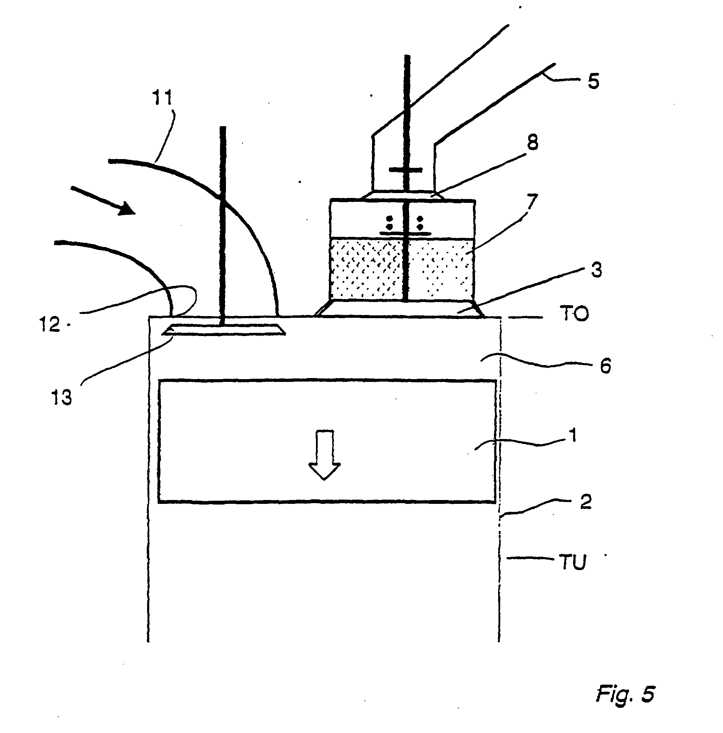

Fig. 5 zeigt die Wärmekraftmaschine nach Fig. 1 am Beginn des Ansaug-Takts. Das erste 3 und dritte Ventil 8 sind geschlossen; das zweite Ventil 13 ist geöffnet. Durch die zweite Öffnung 12 wird durch die Abwärtsbewegung des Kolbens 1 Luft in den Brennraum 6 gesaugt. Währenddessen setzt sich der Mischungs- und Homogenisierungsprozeß zwischen Flüssigbrennstoff und Abgasen in der Kammer 14 bzw. im porösen Mittel 7 fort.

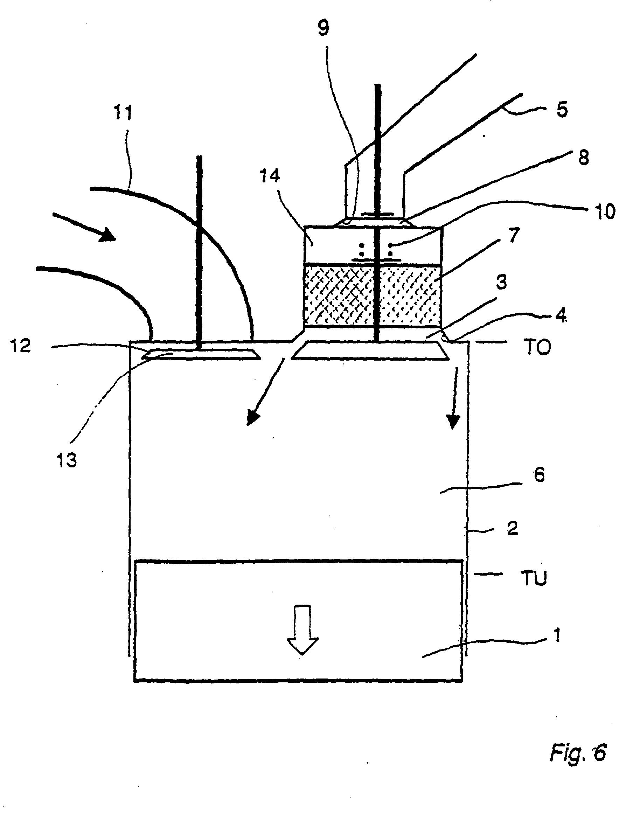

Fig. 6 zeigt die Wärmekraftmaschine nach Fig. 1 am Ende des Ansaug-Takts. Das erste 3 und das zweite Ventil 13 sind geöffnet. Das Vorgemisch gelangt sowohl durch Druckexpansion als auch durch den im Zylinder 2 herrschenden Unterdruck in den Brennraum 6. Gleichzeitig wird weiterhin Luft durch den zweiten Kanal 11 zugeführt.

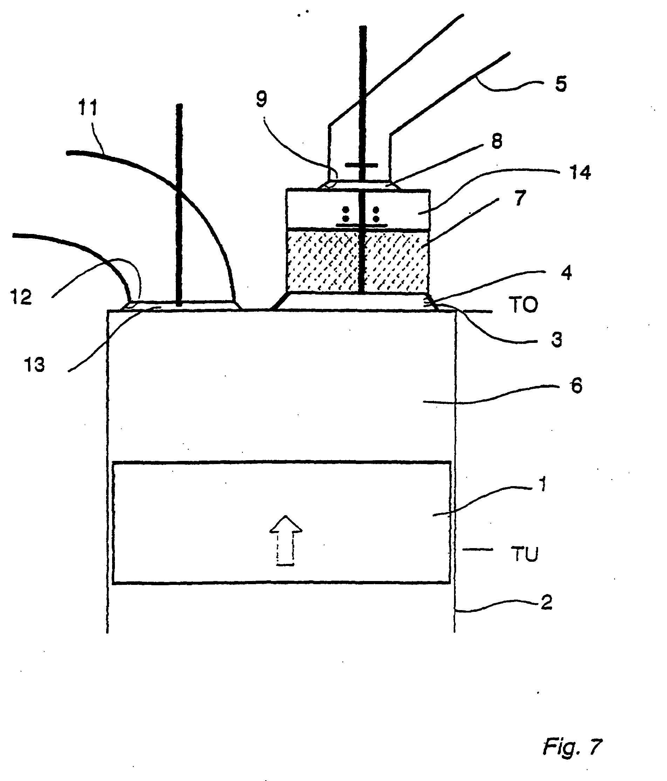

Fig. 7 zeigt die Wärmekraftmaschine nach Fig. 1 während des Verdichtungs-Takts. Das erste 3, zweite 13 und dritte Ventil 8 sind geschlossen. Das aus Luft und dem Vorgemisch bestehende brennbare Gemisch wird verdichtet und in der Nähe des oberen Totpunkts TO gezündet (hier nicht dargestellt).

Eine erste alternative Ausgestaltung besteht darin, daß eine Verbindungsleitung zwischen dem zweiten Kanal 11 und der Kammer 14 vorgesehen ist. Diese (hier nicht dargestellte) Verbindungsleitung kann mit einem ebenfalls nicht dargestellten weiteren Ventil verschließbar sein. Beim Entladen des Vorgemischs während des Ansaug-Takts kann die Kammer 14 zusätzlich mit Luft geflutet werden, um das Vorgemisch vollständig aus der Kammer 14 in den Brennraum 6 zu überführen.

Nach einer zweiten alternativen Ausführungsform werden die Abgase in der Kammer 14 nicht verdichtet. Flüssigbrennstoff wird in das heiße poröse Mittel 7 eingespritzt. Das Überführen des Vorgemischs von der Kammer 14 in den Brennraum 6 erfolgt wiederum unter Flutung der Kammer 14 mit Luft.

Die Funktion der zweiten Wärmekraftmaschine ist die folgende:

In Fig. 8 befindet sich die zweite Wärmekraftmaschine in einer ersten - frühen - Phase des Arbeits-Takts. Der Kolben 1 bewegt sich vom Zylinderkopf weg. Das erste 3 und das zweite Ventil 13 sind geschlossen. Das vierte Ventil 18 ist geöffnet. Das in der weiteren Kammer 15 befindliche poröse Mittel 7 wird mit aus dem Brennraum 6 zugeführten heißen Abgasen beladen.

Fig. 9 zeigt die zweite Wärmekraftmaschine nach Fig. 8 während einer ersten - frühen - Phase des Ausstoß-Takts. Das erste Ventil 3 ist geöffnet. Das zweite 13 und vierte Ventil 18 sind geschlossen. Durch die erste Öffnung 4 werden die restlichen Abgase aus dem Brennraum 6 abgeführt. In das poröse Mittel 7 wird nun Flüssigbrennstoff, z.B. Dieselkraftstoff, eingespritzt. Im porösen Mittel 7 verdampft der Flüssigbrennstoff. Es bildet sich ein aus Flüssigbrennstoff und Abgasen bestehendes nicht zündfähiges Vorgemisch.

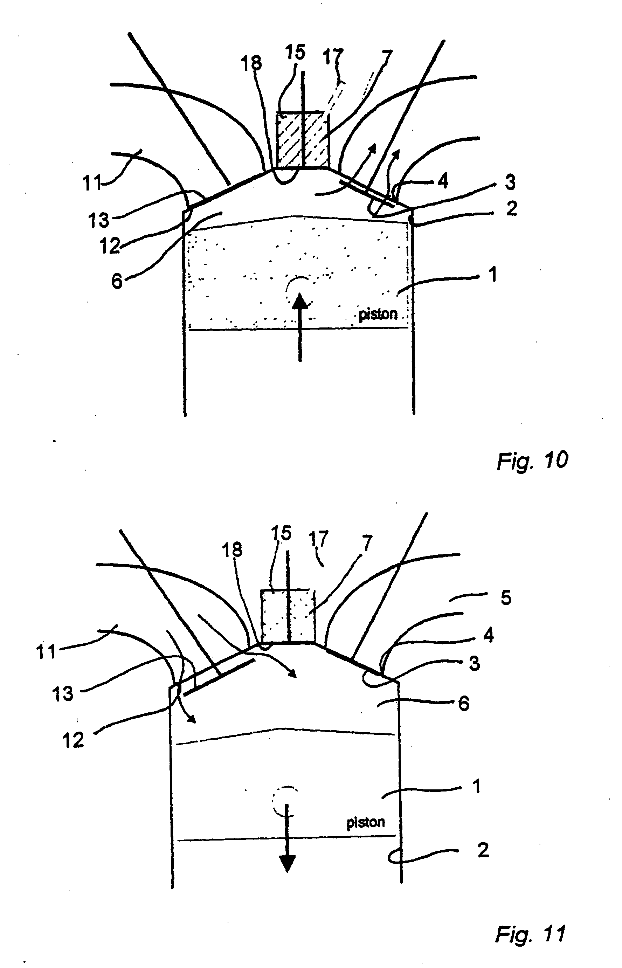

Fig. 10 zeigt eine zweite - späte - Phase des Ausstoß-Takts. Der Kolben 1 befindet sich in der Nähe des oberen Totpunkts. Das erste Ventil 3 ist im Begriff, sich zu schließen. Das in der weiteren Kammer 15 bzw. im porösen Mittel 7 befindliche Vorgemisch wird weiter homogenisiert.

Fig. 11 zeigt den Einlaß-Takt. Das zweite Ventil 13 ist geöffnet. Das erste 3 und vierte Ventil 18 sind geschlossen. Der Brennraum 6 wird durch die erste Öffnung 12 mit sauerstoffhaltigem Gas, z.B. mit Luft, beladen.

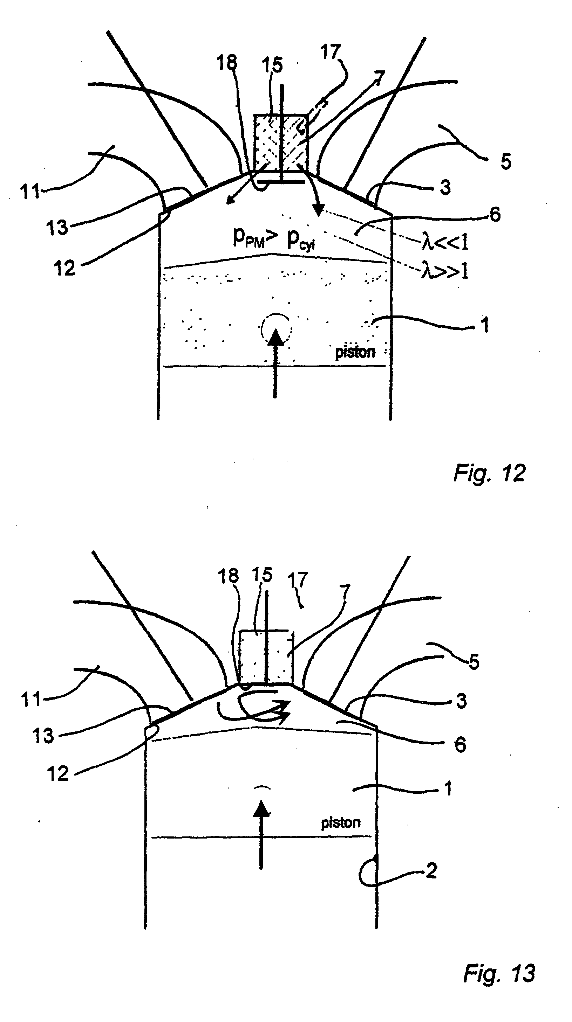

Fig. 12 zeigt eine erste Phase des Verdichtungs-Takts. Das erste 3 und das zweite Ventil 13 sind geschlossen. Das vierte Ventil 18 ist geöffnet. Der Brennraum 6 wird mit dem Vorgemisch beladen.

In Fig. 13 ist eine zweite - späte - Phase des Verdichtungs-Takts gezeigt. Der Kolben 1 befindet sich in der Nähe des oberen Totpunkts. Das erste 3, zweite 13 und vierte Ventil 18 sind geschlossen. Im Brennraum 6 befindet sich nun ein hochverdichtetes aus sauerstoffhaltigem Gas, Abgasen und verdampftem Flüssigbrennstoff bestehendes zündfähiges Gemisch.

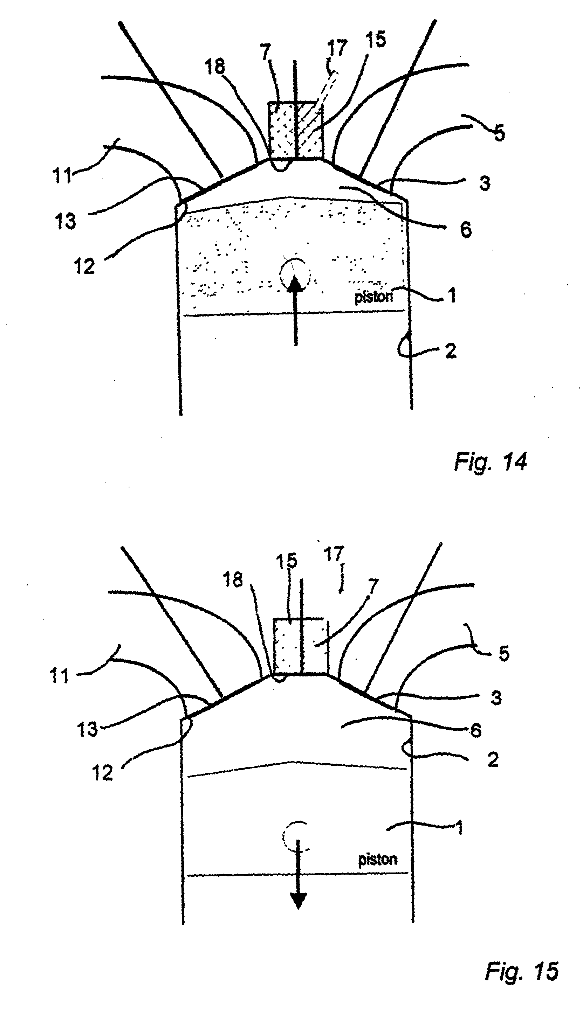

Fig. 14 zeigt eine zweite Phase des Verdichtungs-Takts, bei welcher der Kolben 1 sich am oberen Totpunkt befindet. Das Gemisch zündet.

In Fig. 15 ist eine zweite - frühe - Phase des Arbeits-Takts gezeigt. Dabei sind noch alle drei Ventile 3, 13 und 18 geschlossen.

Mit dem erfindungsgemäßen Verfahren ist es möglich, dem Brennraum 6 in allen Lastbereichen ein vollständig homogenes gasförmiges Gemisch zuzuführen. Im Vergleich zu Direkteinspritzverfahren ist hier kein besonders hoher Einspritzdruck erforderlich. Die Flammtemperatur kann durch die vorgeschlagene teilweise Abgasrückführung verringert werden. So wird eine rußfreie und weitgehend kohlenwasserstoffreie schadstoffarme Verbrennung ermöglicht. Zur Optimierung der Verbrennung ist es mit Hilfe des vorgeschlagenen Verfahrens weiterhin möglich, die Schichtung im Zylinder zu kontrollieren.

### Bezugszeichenliste

- 1: Kolben
- 2: Zylinder
- 3: erstes Ventil
- 4: erste Öffnung
- 5: erster Kanal
- 6: Brennraum
- 7: poröses Mittel
- 8: drittes Ventil
- 9: dritte Öffnung
- 10: Feder
- 11: zweiter Kanal
- 12: zweite Öffnung
- 13: zweites Ventil
- 14: Kammer
- 15: weitere Kammer
- 16: Einspritzdüse
- 17: vierte Öffnung
- 18: viertes Ventil

- TO: oberer Totpunkt
- TU: unterer Totpunkt

## Patentansprüche

1. Verfahren zur Erzeugung eines aus Flüssigbrennstoff und sauerstoffhaltigem Gas bestehenden Gemischs zum Betrieb einer Wärmekraftmaschine, wobei der Flüssigbrennstoff in einen mit dem Brennraum verbindbaren Raum (5) eingespritzt und durch ein im Raum (5) aufgenommenes poröses Mittel (7) geführt und verdampft wird, **dadurch gekennzeichnet, daß** im porösen Mittel (7) ein aus Abgasen und verdampftem Flüssigbrennstoff bestehendes nicht zündfähiges Vorgemisch hergestellt und anschließend das Vorgemisch im Brennraum (6) mit sauerstoffhaltigem Gas gemischt wird.

2. Verfahren nach Anspruch 1, wobei der Raum ein erster Kanal (5) ist.

3. Verfahren nach Anspruch 2, wobei durch den ersten Kanal (5) die bei der Verbrennung gebildeten Abgase abgeführt werden.

4. Verfahren nach einem der vorhergehenden Ansprüche, wobei die Wärme der Abgase zumindest teilweise auf das poröse Mittel (7) übertragen wird.

5. Verfahren nach einem der vorhergehenden Ansprüche, wobei zumindest ein Teil der Abgase im porösen Mittel (7) verdichtet wird.

6. Verfahren nach einem der vorhergehenden Ansprüche, wobei das Vorgemisch dem Brennraum (6) zugeführt wird.

7. Verfahren nach Anspruch 2, wobei der Brennraum (6) mit einem zweiten Kanal (11) verbindbar ist.

8. Verfahren nach Anspruch 7, wobei durch den zweiten Kanal (11) sauerstoffhaltiges Gas dem Brennraum (6) zugeführt wird.

9. Verfahren nach einem der vorhergehenden Ansprüche, wobei das aus dem Vorgemisch und dem sauerstoffhaltigen Gas bestehende Gemisch im Brennraum verdichtet und anschließend verbrannt wird.

10. Verfahren nach Anspruch 2, wobei während eines Ansaug-Takts ein erstes Ventil (3) zum Verschließen des ersten Kanals (5) und ein zweites Ventil (13) zum Verschließen eines zweiten Kanals (11) geöffnet werden.

11. Verfahren nach einem der vorhergehenden Ansprüche, wobei beim Ausstoßen der Abgase der erste Kanal (5) bei geöffnetem ersten Ventil (3) mit einem dritten (8) abgasstromabwärts des porösen Mittels (7) nachgeschalteten Ventil zumindest zeitweise geschlossen wird.

12. Verfahren nach einem der vorhergehenden Ansprüche, wobei der Raum eine mit einem vierten Ventil verschließbare Kammer ist.

13. Verfahren nach Anspruch 12, wobei das vierte Ventil während des Arbeits-Takts für eine vorgegebene Zeit geöffnet wird.

14. Verfahren nach Anspruch 13, wobei das vierte Ventil während des Verdichtungs-Takts für eine vorgegebene Zeit geöffnet wird.

15. Wärmekraftmaschine mit einem Mittel zum Einspritzen von Flüssigbrennstoff in einen ersten mit einem Brennraum (6) verbindbaren Raum (5), wobei der Flüssigbrennstoff durch ein im Raum (5) aufgenommenes poröses Mittel (7) führbar ist und wobei zwischen dem Raum (5) und dem Brennraum (6) eine mit einer Steuereinrichtung steuerbares Absperrmittel (3) vorgesehen ist, **dadurch gekennzeichnet, daß** das Absperrmittel (3) so steuerbar ist, daß im porösen Mittel (7) ein aus Abgasen und verdampftem Flüssigbrennstoff bestehendes nicht zündfähiges Vorgemisch herstell- und anschließend das Vorgemisch im Brennraum (6) mit sauerstoffhaltigem Gas mischbar ist.

16. Wärmekraftmaschine nach Anspruch 15, wobei der Raum ein erster Kanal (5) und das Absperrmittel ein erstes Ventil (3) ist.

17. Wärmekraftmaschine nach Anspruch 15 oder 16, wobei die Wärme der Abgase zumindest teilweise auf das poröse Mittel (7) übertragbar ist.

18. Wärmekraftmaschine nach einem der Ansprüche 15 bis 17, wobei das poröse Mittel (7) derart aufheizbar ist, daß der Flüssigbrennstoff verdampfbar ist.

19. Wärmekraftmaschine nach einem der Ansprüche 15 bis 18, wobei ein zweites Ventil (13) zum Absperren eines zweiten Kanals (11) gegenüber dem Brennraum (6) vorgesehen ist.

20. Wärmekraftmaschine nach Anspruch 19, wobei durch den zweiten Kanal (11) sauerstoffhaltiges Gas dem Brennraum (6) zuführbar ist.

21. Wärmekraftmaschine nach einem der Ansprüche 15 bis 20, wobei ein Mittel zum Mischen und Verdichten des verdampften Flüssigbrennstoffs und weiteren sauerstoffhaltigen Gases im Brennraum (6) vorgesehen ist.

22. Wärmekraftmaschine nach einem der Ansprüche 15 bis 21, wobei das Mittel zum Mischen und Verdichten ein in einem Zylinder hin- und herbewegbarer Kolben (1) ist.

23. Wärmekraftmaschine nach einem der Ansprüche 19 bis 22, wobei mittels der Steuereinrichtung das erste und das zweite Ventil so steuerbar sind, daß während eines Ansaug-Takts das erste Ventil (3) und das zweite Ventil (13) geöffnet sind.

24. Wärmekraftmaschine nach einem der Ansprüche 15 bis 23, wobei abgasstromabwärts des porösen Mittels (7) ein drittes Ventil (8) zum Verschließen des ersten Kanals (5) vorgesehen ist, so daß Abgase im porösen Mittel (7) komprimierbar sind.

25. Wärmekraftmaschine nach einem der Ansprüche 15 bis 24, wobei der Raum eine mit einem vierten Ventil verschließbare Kammer ist.

26. Wärmekraftmaschine nach einem der Ansprüche 15 bis 25, wobei eine weitere Steuereinrichtung zum Steuern des vierten Ventil vorgesehen ist.

27. Wärmekraftmaschine nach Ansprüch 26, wobei das vierte Ventil während des Arbeits-Takts für eine vorgegebene Zeit mittels der weiteren Steuereinrichtung in Öffnungsstellung bringbar ist.

28. Wärmekraftmaschine nach Anspruch 27, wobei das vierte Ventil während des Verdichtungs-Takts für eine vorgegebene Zeit mittels der weiteren Steuereinrichtung in Öffnungsstellung bringbar ist.

## Claims

1. Procedure to generate a mixture of liquid fuel and oxidised gas for operation of a thermal engine, wherein the liquid fuel is injected into a chamber (5) which can be connected to the combustion chamber, and led through a porous medium (7) contained in the chamber (5) and vaporised, **characterised thereby** that in the porous medium (7) a non-ignitable premixture comprising exhaust gases and vaporised liquid fuel is generated and thereafter the premixture is mixed in the combustion chamber (6) with oxidised gas.

2. Procedure as defined in claim 1, wherein the chamber is a first passageway (5).

3. Procedure as defined in claim 2, wherein the exhaust gases generated during combustion are carried away through the first passageway (5).

4. Procedure as defined in one of the preceding claims, wherein the heat of the exhaust gases is transferred at least partially to the porous medium (7).

5. Procedure as defined in one of the preceding claims, wherein at least a portion of the exhaust gases is compressed in the porous medium (7).

6. Procedure as defined in one of the preceding claims, wherein the premixture is fed to the combustion chamber (6).

7. Procedure as defined in claim 2, wherein the combustion chamber (6) can be connected with a second passageway (11).

8. Procedure as defined in claim 7, wherein oxidised gas is fed to the combustion chamber (6) through the second passageway (11).

9. Procedure as defined by one of the preceding claims, wherein the mixture comprising the premixture and the oxidised gas is compressed in the combustion chamber and is then burned.

10. Procedure as defined by claim 2, wherein, during an intake stroke, a first valve (3) for closing the first passageway (5) and a second valve (13) for closing a second passageway (11) are opened.

11. Procedure as defined by one of the preceding claims, wherein, during venting of the exhaust gases, the first passageway (5) with the first valve (3) open is at least intermittently closed with a third (8) valve connected downwards from the exhaust gas flow of the porous medium (7).

12. Procedure as defined by one of the preceding claims, wherein the space is a chamber which can be closed with a fourth valve.

13. Procedure as defined by claim 12, wherein the fourth valve is opened during the working stroke for a specified amount of time.

14. Procedure as defined by claim 13, wherein the fourth valve is opened during the compression stroke for a specified amount of time.

15. Thermal engine with a medium for injection of liquid fuel into a first chamber (5) which can be connected to a combustion chamber (6), wherein the liquid fuel can be led through a porous medium (7) contained in the chamber (5), and wherein, between the chamber (5) and the combustion chamber (6), a shut-off medium (3) is provided which can be controlled with a control unit, **characterised** thereby that the shut-off medium (3) can be controlled so that a non-ignitable premixture comprised of exhaust gases and vaporised liquid fuel can be generated in the porous medium (7) and thereafter the premixture can be mixed in the combustion chamber (6) with oxidised gas.

16. Thermal engine as defined by claim 15, wherein the chamber is a first passageway (5) and the shut-off medium is a first valve (3).

17. Thermal engine as defined by claim 15 or 16, wherein the heat of the exhaust gases can at least partially be transferred to the porous medium (7).

18. Thermal engine as defined by one of the claims 15 to 17, wherein the porous medium (7) can be heated to such an extent that the liquid fuel can be vaporised.

19. Thermal engine as defined by one of the claims 15 to 18, wherein a second valve (13) for shutting off a second passageway (11) across from the combustion chamber (6) is provided.

20. Thermal engine as defined by claim 19, wherein oxidised gas can be fed to the combustion chamber (6) through the second passageway (11).

21. Thermal engine as defined by one of the claims 15 to 20, wherein a means of mixing and compressing the vaporised liquid fuel and other oxidised gas is provided in the combustion chamber (6).

22. Thermal engine as defined by one of the claims 15 to 21, wherein the means of mixing and compressing is a piston (1) which can be moved back and forth in a cylinder.

23. Thermal engine as defined by one of the claims 19 to 22, wherein the first and the second valve can be controlled with the control unit so that, during an intake strike, the first valve (3) and the second valve (13) are open.

24. Thermal engine as defined by one of the claims 15 to 23, wherein a third valve (8) downwards from the exhaust gas flow of the porous medium (7) is provided to close the first passageway (5) so that exhaust gases can be compressed in the porous medium (7).

25. Thermal engine as defined by one of the claims 15 to 24, wherein the chamber is a chamber which can be closed with a fourth valve.

26. Thermal engine as defined by one of the claims 15 to 25, wherein an additional control unit is provided to control the fourth valve.

27. Thermal engine as defined by claim 26, wherein, during the working stroke, the fourth valve can be brought into an opening position for a specified amount of time with the additional control unit.

28. Thermal engine as defined by claim 27, wherein, during the compression stroke, the fourth valve can be brought into an opening position for a specified amount of time with the additional control unit.

## Revendications

1. Procédé destiné à la production d'un mélange composé d'un combustible liquide et d'un gaz oxygéné pour le fonctionnement d'un moteur thermique, le combustible liquide étant injecté dans une chambre (5) laquelle peut être reliée à la chambre de chauffe, et introduit puis évaporé dans la chambre (5) par un médium (7) poreux capté, **caractérisé par le fait que**, dans le médium poreux (7), un pré-mélange non inflammable composé de gaz d'échappement et de combustible liquide évaporé est produit, puis que le pré-mélange est mélangé avec un gaz oxygéné dans la chambre de chauffe (6).

2. Procédé selon la revendication 1, la chambre étant un premier canal (5).

3. Procédé selon la revendication 2, les gaz d'échappement formés lors de la combustion étant évacués par le premier canal (5).

4. Procédé selon une des revendications précédentes, la chaleur des gaz d'échappement étant transférée, tout au moins en partie, au médium poreux (7).

5. Procédé selon une des revendications précédentes, au moins une partie des gaz d'échappement étant comprimée dans le médium poreux (7).

6. Procédé selon une des revendications précédentes, le pré-mélange étant amené dans la chambre de chauffe (6).

7. Procédé selon la revendication 2, la chambre de chauffe (6) pouvant être reliée à un deuxième canal (11).

8. Procédé selon la revendication 7, du gaz oxygéné étant amené dans la chambre de chauffe (6) par le biais du deuxième canal (11).

9. Procédé selon une des revendications précédentes, le mélange composé du pré-mélange et du gaz oxygéné étant comprimé dans la chambre de chauffe puis brûlé.

10. Procédé selon la revendication 2, une première soupape (3) destinée à la fermeture du premier canal (5) et une deuxième soupape (13) destinée à la fermeture d'un deuxième canal (11) étant ouvertes pendant la course d'aspiration.

11. Procédé selon une des revendications précédentes, le premier canal (5), première soupape ouverte (3), étant fermé au moins temporairement par une troisième soupape (8) en aval dans le sens du flux des gaz d'échappement du médium poreux (7) lors du rejet des gaz d'échappement.

12. Procédé selon une des revendications précédentes, la chambre étant une chambre verrouillable avec une quatrième soupape.

13. Procédé selon la revendication 12, la quatrième soupape étant ouverte pour une durée définie pendant la phase de travail.

14. Procédé selon la revendication 13, la quatrième soupape étant ouverte pour une durée définie pendant le temps de compression.

15. Moteur thermique avec un médium destiné à l'injection de combustible liquide dans une première chambre (5) pouvant être reliée à une chambre de chauffe (6), le combustible liquide pouvant être amené par un médium (7) poreux capté dans la chambre (5) et un dispositif d'arrêt (3) pouvant être piloté par le biais d'un dispositif de commande étant prévu entre la chambre (5) et la chambre de chauffe (6), **caractérisé par le fait que** le dispositif d'arrêt (3) peut être commandé de façon que, dans le médium poreux (7), un pré-mélange non inflammable composé de gaz d'échappement et de combustible liquide évaporé soit produit, puis que le pré-mélange dans la chambre de chauffe (6) soit miscible avec un gaz oxygéné.

16. Moteur thermique selon la revendication 15, la chambre étant un premier canal (5) et le dispositif d'arrêt une première soupape (3).

17. Moteur thermique selon la revendication 15 ou 16, la chaleur des gaz d'échappement étant au moins en partie transférable au médium poreux (7).

18. Moteur thermique selon une des revendications 15 à 17, le médium poreux (7) pouvant être chauffé à tel point que le combustible liquide est évaporable.

19. Moteur thermique selon une des revendications 15 à 18, une deuxième soupape (13) étant prévue pour bloquer un deuxième canal (11) face à la chambre de chauffe (6).

20. Moteur thermique selon la revendication 19, du gaz oxygéné pouvant être amené dans la chambre de chauffe (6) par le deuxième canal (11).

21. Moteur thermique selon une des revendications 15 à 20, un moyen servant au mélange et à la compression du combustible liquide évaporé et d'autres gaz oxygénés étant prévu dans la chambre de chauffe (6).

22. Moteur thermique selon la revendication 15 à 21, le moyen servant au mélange et à la compression étant un piston (1) décrivant un mouvement de va-et-vient dans un cylindre.

23. Moteur thermique selon une des revendications 19 à 22, la première et la deuxième soupape pouvant être commandées à l'aide du dispositif de commande de façon que la première soupape (3) et la deuxième soupape (13) soient ouvertes pendant une course d'aspiration.

24. Moteur thermique selon une des revendications 15 à 23, une troisième soupape (8) dans le sens du flux des gaz d'échappement du médium poreux (7) étant prévue pour la fermeture du premier canal (5) de façon que les gaz d'échappement soient comprimables dans le médium poreux (7).

25. Moteur thermique selon une des revendications 15 à 24, la chambre étant une chambre verrouillable avec une quatrième soupape.

26. Moteur thermique selon une des revendications 15 à 25, un autre dispositif de commande étant prévu pour la commande de la quatrième soupape.

27. Moteur thermique selon la revendication 26, la quatrième soupape pouvant être avancée en position d'ouverture pour une durée définie pendant la phase de travail à l'aide d'un autre dispositif de commande.

28. Moteur thermique selon la revendication 27, la quatrième soupape pouvant être avancée en position d'ouverture pour une durée définie pendant le temps de compression à l'aide d'un autre dispositif de commande.
